# EUROPEAN PATENT SPECIFICATION

(11) **EP 3 313 760 B1**
(45) Date of publication and mention of the grant of the patent: **15.12.2021**
(21) Application number: 16770351.1
(22) Date of filing: 21.06.2016
(51) Int. Cl.: B65G 49/08, F27D 3/00, B65G 47/64

(54) **STORAGE DEVICE FOR CERAMIC PRODUCTS AND THE LIKE**
AUFBEWAHRUNGSVORRICHTUNG FÜR KERAMIKPRODUKTE UND DERGLEICHEN
DISPOSITIF DE RANGEMENT POUR PRODUITS EN CÉRAMIQUE ET ANALOGUES

(30) Priority: 23.06.2015 IT UB20151594
(43) Date of publication of application: 02.05.2018
(73) Proprietor: Siti - B&T Group S.p.A., 41043 Formigine (Modena) (IT)
(72) Inventor: TAROZZI, Fabio, 41043 Formigine (Modena) (IT); BIANCHINI, Alessandro, 41043 Formigine (Modena) (IT)
(74) Representative: Feltrinelli, Secondo Andrea
(86) International application number: PCT/IB2016/053684
(87) International publication number: WO 2016/207789

(56) References cited:
- EP-A1- 0 301 231
- EP-A1- 0 999 158
- EP-A1- 1 203 737
- EP-A1- 2 826 736
- DE-A1- 3 320 737
- FR-A- 1 248 812
- FR-A1- 2 665 150
- US-A- 2 896 800

## Description

### TECHNICAL FIELD OF THE INVENTION

The present invention regards a storage device for ceramic products and the like.

More in detail, the present invention refers to a storage device for ceramic products, such as typically tiles, comprising one or more transportable storage elements of the roller boxes type or the like.

### STATE OF THE PRIOR ART

During the various stages of the production cycle of ceramic products such as tiles and the like, transportable storage elements of the roller boxes type are used.

A roller box typically comprises a framework which supports a series of superimposed planes each made up of a plurality of parallel rollers; in each of the planes of the box of the box, various product groups (referred to as *"quadrotte or tile square*" in the tiles industry) may be inserted.

The rollers of each of the planes of the boxes may be actuated - usually through external driving members - to rotate in a synchronised manner so as to advance the group of tiles supported thereby in one direction or in the other.

Such storage elements may, for example, be associated to a determined machine or production station, and they may be used both in the loading and unloading mode; in other words, they can be used for supplying a given machine or station with products to be processed or they can be used for gathering the products already processed or exiting from a machine or station, or for other purposes.

Following loading or unloading operations (i.e. filling or emptying them with/of the products) such roller boxes may be easily transported towards other production stations or other areas of the factory for example using automatic drive vehicles or the like.

In the storage devices of this type, the roller boxes are usually filled or emptied by means of a vertically mobile roller conveyor, which is controlled to be selectively positioned at the height of the plane to be loaded or unloaded; such roller conveyor, actuated in rotation in a synchronised manner with rollers of the involved box (with which it thus forms a temporary transport plane) determines the translation of the group of products in the direction of insertion or extraction, depending on the needs.

The mobile roller conveyor, in turn, is supplied by further conveying means (for example of the roller type, belt type etc.) which form the "quadrotte or tile squares" of products, for example coming from a determined production station, and thus transfer them on the roller conveyor itself.

In order to eliminate downtimes during such product loading or unloading operations, storage devices currently provide for simultaneously operating on two adjacent boxes, so that while a box (full or empty) is moved away from the device through a transporter vehicle, the other is filled (or emptied) by the mobile roller conveyor, and so on.

Given that the roller conveyor should be able to serve both the adjacent boxes, in order to obtain the required movements in the devices of the known type, there were conceived support structures, for example shaped to form a large portal, having width at least corresponding to that of the two adjacent boxes in the respective correct operating positions, and having a height obviously at least equivalent to that of the boxes.

In a particular device of the known type, the aforementioned support structure comprises a crosspiece vertically mobile along respective guides provided for in the uprights of the structure itself; such crosspiece bears the roller conveyor for supplying the boxes, which may in turn move along the crosspiece: thus, the roller conveyor may reach any plane of each of the two boxes.

Currently, for example due to needs for increasing productivity, or with the aim of increasing the dimensions of the products, roller boxes are provided with an ever-increasing size both width-wise and height-wise.

Thus, even the dimensions of the support structure of the roller conveyor increase consequently.

This obviously implies greater need for space in the factory, increase of costs for the construction of the entire device, greater stresses on the structure and thus more urgent needs in terms of structural calculations, the actuations used for obtaining the movements of the roller conveyor, and so on.

Besides this, the increase of the dimensions of the boxes, and thus the support structure of the roller conveyor, tends to slow the loading and unloading operations, and this may be penalizing during specific stage of the production.

EP 0 999 158 discloses a modular station for the automated loading and unloading of ceramic products, comprising a machine provided with a movable arm guided vertically on a frame, and provided with a motorization for the alternated actuation of the rollers of each supporting surface of two boxes arranged in a work area of the machine.

The station further includes a flat roller conveyor for spatial connection between the supporting surfaces of the boxes and a floor-level platform for exchanging the products with a conveyance line.

The station combines a strictly parallel arrangement of the rollers of the flat roller conveyor and the floor-level platform and of the rollers of the boxes with the movability of the flat roller conveyor on a fixed frame at least along a horizontal axis and a vertical axis. Said document discloses a storage device for ceramic products and the like, comprising at least one positioning station for at least two roller boxes arranged side by side, each of which comprising a plurality of superimposed planes for the insertion or the extraction of ceramic product groups, said planes being defined by respective pluralities of parallel rollers, at least one station for conveying ceramic products towards, or from, said positioning station, at least one mobile roller conveyor, interposed between said positioning station and said conveying station, comprising at least one transfer plane of the type with motor-driven rollers and at least one support structure of said transfer plane provided with vertical translation means suitable for selectively positioning said transfer plane at a height corresponding to any one of said planes of each one of said boxes, for the insertion or the extraction of a ceramic product group towards or from each one of said planes, wherein said mobile roller conveyor comprises means for the horizontal translation of said support structure along a first direction parallel to the axes of said rollers, adapted to selectively position said transfer plane at each one of said boxes. Said document further discloses a method for storing ceramic products and the like using said storage device.

FR 2 665 150 discloses a device for loading or unloading small boxes or similar containers, into or out of a carrying structure for receiving or transporting such small boxes, including a principle portal structure movable over a guide path, against which are arranged superimposes staged carriages.

The device includes a horizontal plate vertically movable on the portal structure, supporting a horizontal conveyor belt capable of displacing a small box, and an auxiliary portal structure supported by the movable plate and adapted to raise or lower, with respect to the plate, a support framework equipped with two horizontal drive belts, suitable for supporting the small box raised from the belt, and of introducing it on, or remove it from, a rack of the carriage.

### OBJECTS OF THE INVENTION

The technical objective according to the present invention is that of improving the state of the art.

In this technical context, providing a device for storing ceramic products and the like which allows overcoming the aforementioned drawbacks is an object of the present invention.

Another object of the present invention is to provide a device for storing ceramic products and the like that is simple from a manufacturing and functional point of view, with respect to devices of the known type.

Still, another object of the present invention is to make available a device for storing ceramic products and the like with satisfactory performance even in case of use of roller boxes of large dimensions.

This task and these objects are attained by the device for storing ceramic products according to the attached claim 1.

The device for storing ceramic products and the like according to the invention comprises at least one station for positioning at least two roller boxes arranged side by side, each of which comprising a plurality of superimposed planes for the insertion of extraction of ceramic product groups; such planes are defined by respective pluralities of parallel rollers.

The device further comprises at least one station for conveying ceramic products towards, or from the, positioning station, and at least one mobile roller conveyor, interposed between the positioning station and the conveying station.

The mobile roller conveyor comprises at least one transfer plane of the type with motor-driven rollers, and at least one support structure provided with vertical translation means for selectively positioning said transfer plane at a height corresponding to any one of said planes of each one of said boxes, for the insertion or the extraction of a ceramic product group towards or from each one of said planes.

The mobile roller conveyor comprises means for the horizontal translation of the support structure along a first direction parallel to the axes of the rollers, adapted to selectively position said support structure at each one of said boxes.

More in detail, the translation of the support structure occurs when the mobile roller conveyor is not loaded with any group of products, in other words when it is not loaded.

According to the invention, the conveying station comprises at least one element for sorting ceramic product groups, positioned immediately adjacent to the mobile roller conveyor, adapted to translate along a second direction, parallel to said first direction, to position itself selectively towards one or the other of the roller boxes.

In particular, thanks to the latter solution, the support structure of the mobile roller conveyor should not translate horizontally to be positioned at each of the roller boxes when it is loaded with products group, in that such translation movement is carried out by the sorter element: thus, as mentioned, it translates horizontally only when loaded. Thus, the structure for supporting the mobile roller conveyor may be obtained in a simpler, slimmer and lighter manner; thus, the mobile roller conveyor may instead translate faster and more easily in the horizontal direction, so as to be positioned at each of the single roller boxes.

The dependent claims refer to preferred and advantageous embodiments of the invention.

### BRIEF DESCRIPTION OF THE DRAWINGS

Further characteristics and advantages of the present invention shall be more apparent from the detailed description of a preferred but non-exclusive embodiment of a device for storing ceramic products and the like, illustrated by way of non-limiting example in the attached drawings, wherein:
figure 1 is a lateral view of the storage device according to the invention;
figure 2 is a plan view of the storage device;
figure 3 is a detailed front view of the mobile roller conveyor of the storage device;
figure 4 is a detailed lateral view of the mobile roller conveyor of the storage device.

### EMBODIMENTS OF THE INVENTION

With reference to the attached figures, a device for storing ceramic products and the like according to the present invention, is generally indicated with reference number 1.

The storage device 1 according to the present invention can be preferably, but not exclusively, installable along a line for producing ceramic products, such as preferably, but not exclusively, ceramic tiles and the like.

For example, the storage device 1 according to the present invention may be associated, in input or output mode, to a determined machine or production station of any type, without limitations, or it may be installed along a products transportation line, in determined points of the same where the products require to be stored, even temporarily, for any reason.

The storage device 1, comprises at least one positioning station, indicated in its entirety with 2.

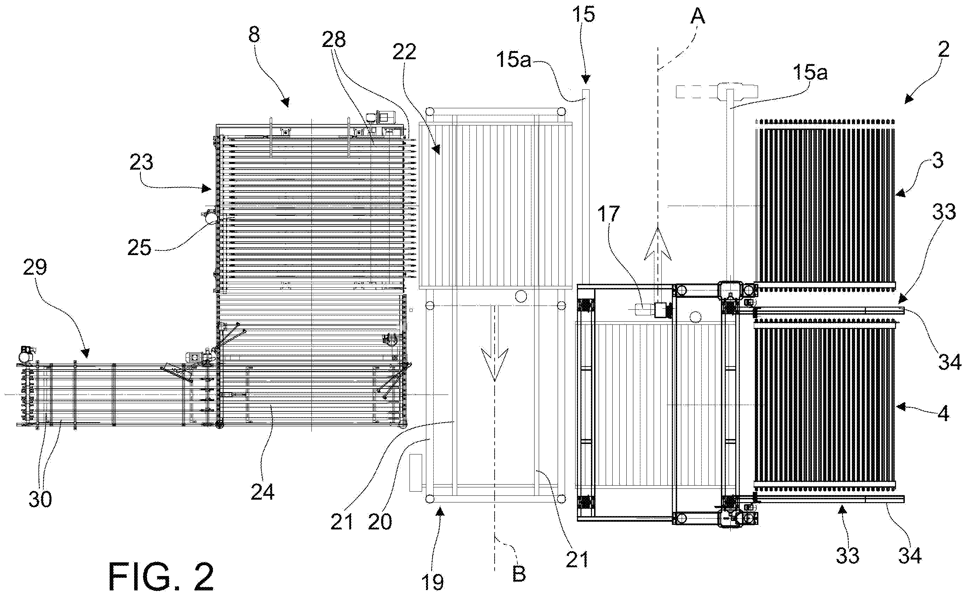

The positioning station 2 is adapted to house at least two roller boxes 3,4 arranged side by side, as shown in the plan view of figure 2.

In the embodiment of the invention represented in the figures, the positioning station 2 is adapted to house two roller boxes 3,4 arranged side by side, in particular a first roller box 3 and a second roller box 4.

The latter storage configuration - indeed comprising two roller boxes 3,4 arranged side by side - is the one most commonly implemented in the current production lines; this however does not represent a drawback, in that any number of roller boxes 3,4 could actually be provided for in the positioning station 2.

In detail, each of the roller boxes 3,4 comprises a respective substantially parallelepiped-shaped framework 5 supporting a plurality of respective superimposed planes 6 for the insertion or extraction of ceramic products; the latter are not represented in the figures for the sake of simplicity.

The groups of ceramic products handled by the storage device 1 according to the invention could be constituted, for example, by the so-called "quadrotte or tile squares" of ceramic tiles, i.e. groups of tiles arranged in a plane according to a pre-established arrangement, or groups of products of any other type, without any limitation.

The aforementioned planes 6 of the roller boxes 3,4 are defined by respective parallel pluralities of rollers 7, rotatably supported by the aforementioned frame 5.

The roller boxes 3,4 may be transported, both loaded and not loaded, across the factory by means of vehicles, for example automatic drive vehicles and or the like.

The device 1 further comprises at least one station, indicated in its entirety with 8, for conveying ceramic products towards, or from, said positioning system 2.

More in detail, the conveying station 8 allows transporting the products towards the station 2 for positioning the roller boxes 3,4 to insert them, in groups, into the aforementioned planes 6, and moving the products extracted from the planes 6 away, towards another station or machine of the production line.

The storage device 1, comprises at least one mobile roller conveyor, indicated in its entirety with 9.

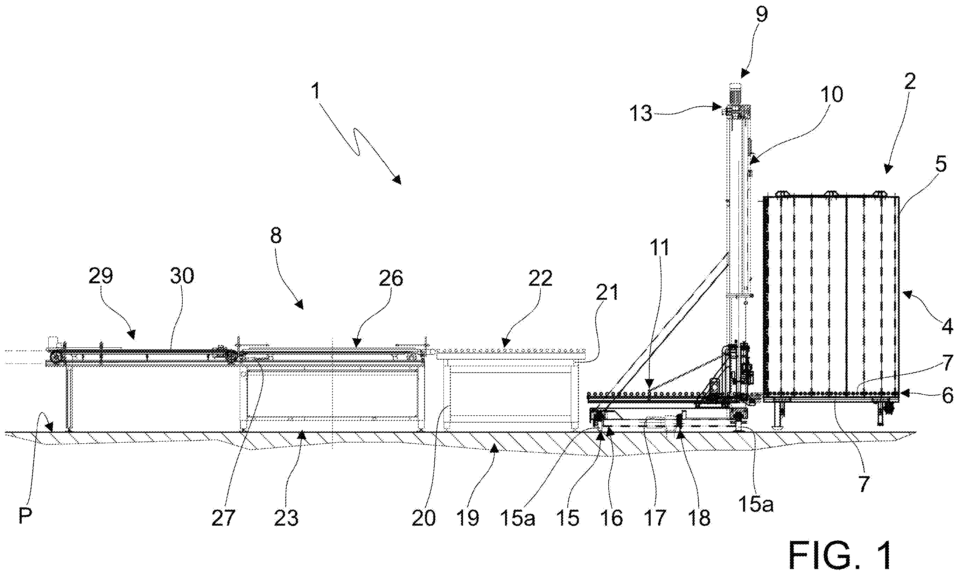

The mobile roller conveyor 9 is interposed between the positioning station 2 and the conveying station 8, as illustrated in figures 1 and 2.

The mobile roller conveyor 9 comprises a support structure 10 and at least one plane 11, of the driven roller type 12, for transferring the ceramic products.

The support structure 10 is provided with vertical translation means 13 for selectively positioning the transfer plane 11 at a height corresponding to any one of the planes 6 of each one of the roller boxes 3,4, for the insertion or the extraction of a ceramic product group towards or from each one of said planes 6.

The mobile roller conveyor 9 comprises means 14 for the horizontal translation of the support structure 10 along a first direction A parallel to the axes of the rollers 7.

More in particular, the aforementioned horizontal translation means 14 are adapted to selectively position the support structure 10 of the mobile roller conveyor 9 at each of the roller boxes 3,4 present in the positioning station 2.

As will become more clear hereinafter, the possibility of translating the entire structure 10 for supporting the mobile roller conveyor 9 respectively at one or the other of the boxes 3,4 allows obtaining a generally lighter, slimmer and smaller construction of the roller conveyor 9, given that it is subjected to considerably lesser mechanical stress with respect to the currently available solutions.

This thanks to the fact that the translation of the support structure 10 is carried out with the transfer plane 11 without the products; with the transfer plane 11 unloaded, in other words.

The means 14, for the horizontal translation of the mobile roller conveyor 9 comprise at least one guide 15, which develops along the aforementioned first direction A.

The horizontal translation means 14 also comprise at least one carriage 16, mobile along the guide 15; the structure 10 for supporting the mobile roller conveyor 9 is fixed to the carriage 16.

More in detail, the guide 15 comprises at least one track 15a fixed to the floor P in a zone interposed between the conveying station 8 and the positioning station 2; the carriage 16 is slidably coupled to the aforementioned at least one track 15a.

In a preferred embodiment of the invention, the guide 15 comprises two parallel tracks 15a, to which the carriage 16 is slidably coupled at two juxtaposed portions thereof, for example through wheels or other similar means.

The tracks 15a preferably have a length greater than the width of the overall dimension of the two roller boxes 3,4 arranged side by side in the positioning station 2, so as to allow the carriage 16 to assume the correct position at each of the two boxes 3,4.

The horizontal translation means 14 also comprise an actuator 17.

The actuator 17 may for example be integrally joined to the floor P, but it could also be integrally joined to the carriage 16 in other embodiments.

The actuator 17 is coupled to the carriage 16 through suitable transmission means 18, which allow translating the carriage 16 along the aforementioned first direction A.

In a preferred embodiment of the invention, the actuator 17 comprises a gearmotor unit, fixed to the floor P, the transmission means 18 for example comprise a pinion-rack group, or the like.

Obviously, the transmission means 18 may be of any type suitable for transforming the rotary motion coming from gearmotor unit 17 into a motion 16 for translating the carriage along the first direction A.

As concerns what has been mentioned above, both the actuator 17 and the transmission means 18 may be selected and dimensioned in a suitable manner to displace the support structure 10 without ceramic products: this represents an advantage in terms of production and maintenance costs, overall dimensions and other factors clearly known to a man skilled in the art.

According to the invention, the positioning station 8 comprises at least one element 19 for sorting ceramic products.

The sorter element 19 is arranged immediately adjacent to the mobile roller conveyor 9, on the opposite side with respect to the one where the positioning station 2 is provided. The sorter element 19 comprises a respective support framework 20.

The support framework 20 carried, at the top, guides 21 for a slidable roller conveyor 22.

The slidable roller conveyor 22 is driven to translate along a second direction B, parallel to the first direction A.

According to an embodiment, the slidable roller conveyor 22 and the transfer plane 11 of the mobile roller conveyor 9 are selectively positionable at the same level, to allow the transit of product groups from one to the other in both directions.

In an embodiment of the invention, the support framework 20 of the sorter element 19 has a width substantially corresponding to the overall width of the two roller boxes 3,4 arranged side by side in the positioning station 2.

The translation of the slidable roller conveyor 22 along the support framework 20 may be carried out through any means of the known type and suitable for this specific application, for example a gearmotor unit with relative transmission means, a pneumatic actuator, or the like.

The slidable roller conveyor 22 is positioned at a height, with respect to the floor P, entirely compatible with characteristics of the usual lines for transporting the ceramic products, for example of the belt type or the like.

The conveying station 8 further comprises a member 23 for grouping/separating ceramic product groups.

The grouping/separation member 23 is arranged immediately adjacent to the mobile roller conveyor 19, on the opposite side with respect to the one where the mobile roller conveyor 9 is provided.

The grouping/separation member 23 comprises a first area 24, at which the products are grouped or separated, and a second area 25, adjacent to the first area 24, for the transit of the product groups towards or from the sorter element 19.

The grouping/separation member 23 preferably comprises a continuous roller plane 26; at the second area 25 thereof, a plurality of belts 28 is provided that can be lifted through a respective actuator 27 (see figures 1,2) which can be selectively lifted above the roller plane 26 - inserting in the spaces provided between the rollers themselves - to obtain a plane for the transit of the products towards, or from, the sorter element 19. The grouping/separation member 23 communicates with at least one line 29 for the input/output of ceramic products one by one, i.e. in line.

In particular, the inlet/output line 29 directly communicates with the first area 24 of the grouping/separation member 23.

The input/output line 29 comprises a plurality of parallel and driven belts 30 , adapted to transport the products in a line one by one, or other equivalent members.

In a typical production situation of use of the device 1 according to the invention, the input/output line 29 and the grouping/separation member 23, are normally used for displacing the groups of ceramic products towards the roller boxes 3,4.

In this typical situation, the products advance in a line one by one along the input/output line 29, reach the first area 24 of the grouping/separation member 23 and in this a plane group of products arranged according to a preset order (for example the so-called "quadrotta or tile square") is formed.

The plane group, thus formed, passes in the second area 25 of the grouping/separation member 23, and it is transferred from here on the slidable roller conveyor 22 of the sorter element 19.

In another, and opposite, production situation, the products coming from the sorter element 19 are, through reverse stages with respect to the preceding situation, separated by the grouping/separation member 23 and sent in a line one by one up to the input/output line 29.

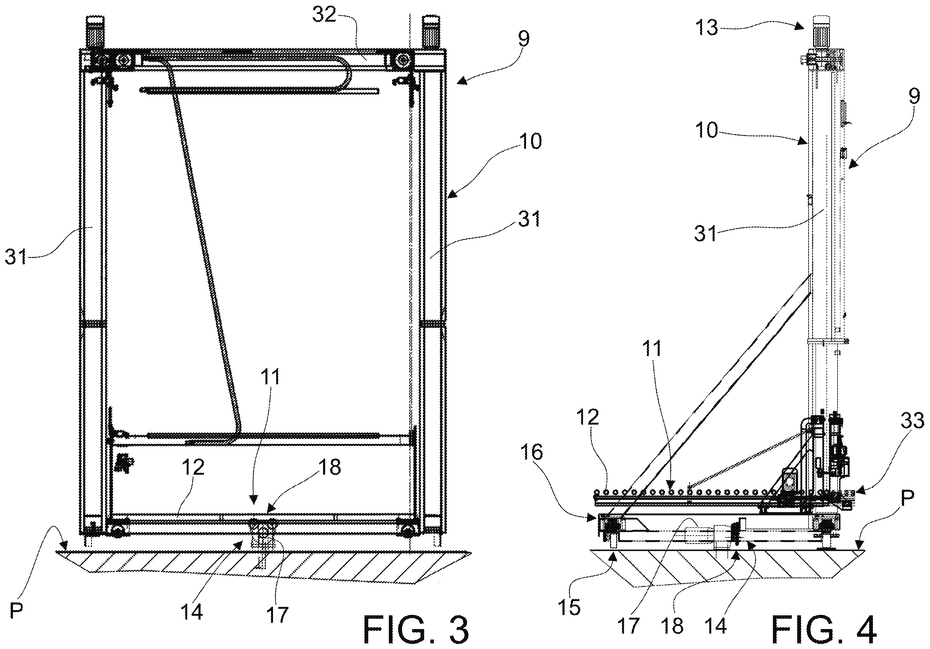

Now, analysing the characteristics of the mobile roller conveyor 9 further in detail, it is observed that the support structure 10 of the latter comprises two uprights 31 connected, at the top, by a crosspiece 32 (see figure 3 for example).

The mutual distance between the uprights 31 is less than the total width of the overall dimensions of two of said boxes 3,4 arranged side by side in said positioning station 2.

Besides reducing the overall dimensions and the weight of the support structure 10 with respect to other solutions of the known type, this solution allows the latter to translate freely along the first direction A so as to be able to indistinctively reach the two correct loading/unloading positions in front of one or the other of the two roller boxes 3,4.

The motor-driven rollers 12 of the transfer plane 11 can be driven in synchronised rotation through actuation means of any type suitable for the purpose, for example a gearmotor unit with respective transmission members, or the like.

According to an embodiment, the mobile roller 9 comprises members 33 for the selective actuation of the rollers 7 of any of said planes 6 of the boxes 3,4 (see figure 2 for example.

More in detail, such selective actuation members 33 are associated to two mobile arms 34 that can be driven to respectively slide along the uprights 31 of the support structure 10.

The arms 34 are selectively positionable at the sides of each one of the roller boxes 3,4 at any one of the planes 6, for the actuation of the respective rollers 7.

Such actuation members 33 may comprise, in detail, actuators that arrange the arms 34 at the sides of the boxes 3,4, so as to activate the specific plane 6 of the rollers 7 in question.

In the light of the above, the operation of the device 1 according to the invention is rather intuitive.

When loading the boxes 3,4, each group of products reaches the sorter element 19 through the grouping/separation member 23, as described previously.

The slidable roller conveyor 22 of the sorter element 19 is thus displaced - if necessary unless it is already in the correct position - at the specific box 3,4 on which such group of products is to be loaded.

The horizontal displacement of the slidable roller conveyor 22, carrying a group of products, may carried out quite easily, in that the translation of the slidable roller conveyor 22 occurs resting, complete and extended, on a special support framework 20 and at a non-elevated height.

Following - or simultaneously with - the displacement of the slidable roller conveyor 22, also the mobile roller conveyor 9 - i.e. the support structure 10 thereof - is displaced at the specific box 3,4 on which the group of products is to be loaded.

More in detail, the transfer plane 11 - unloaded, i.e. without the products - is positioned at the same height as the slidable roller conveyor 22, so as to obtain a uniform plane for the displacement of the products with the latter: the group of products is thus conveyed by the slidable roller conveyor to the transfer plane 11 of the mobile roller conveyor 9. The transfer plane 11 - bearing the group of products - is then actuated to translate vertically, to reach the same height as the plane 6 (of the roller box 3,4 in question) into which the group of products is to be inserted.

The selective driving members 33 are then fitted on the rollers 7 of the plane 6 in question, so that the group of products may be displaced from the transfer plane 11 to the plane 6 of the roller box 3,4 in question.

Normally, the mobile roller conveyor 9 operates as described to completely fill or empty a determined roller box 3,4.

Such operations may even last 30-50 minutes: thus, the mobile roller conveyor 9 does not perform any horizontal displacement during this period of time, and this is an advantage from various points of view.

In the meanwhile, the slidable roller conveyor 22 of the sorter element 19, bearing a subsequent group of products, has been positioned in the direction of the roller box 3,4, in which such group of products will be inserted - i.e. the one not affected by the filling or emptying operations at that time - and the storage cycle continues in this manner, after the translation of the support structure 10 of the mobile roller conveyor 9 in the corresponding position (still without products on the transfer plane 11).

The operations for unloading the groups of products from any of the planes 6 of each of the roller boxes 3,4 occur according to a reverse operating sequence with respect to the one described regarding the loading operations.

In an embodiment of the invention, the horizontal translation means 14 can be actuated only when the transfer plane 11 is without products, i.e. unloaded.

Special means for detecting products above the transfer plane 11, which prevent the actuation of the horizontal translation means 14 in cases where products are present on the plane 11 may be provided for.

It should be observed that a mobile roller conveyor 9, of the type that can be positioned between at least one positioning station 2 for at least two roller boxes 3,4, arranged side by side, and at least one station for conveying towards or from said positioning station 2 also forms an object of the present invention.

The mobile roller conveyor 9, according to the invention comprises at least one transfer plane 11 of the type with motor-driven rollers 12, and at least one support structure 10 provided with vertical translation means 13 for selectively positioning the transfer plane 11 at a height corresponding to any one of said planes 6 of each one of said boxes 3,4, for the insertion or the extraction of a ceramic product group towards or from each one of the planes 6.

The mobile roller conveyor 9 comprises means 14 for the horizontal translation of the support structure 10 along a first direction A parallel to the axes of the rollers 7; such horizontal translation means 14 are adapted to selectively position the support structure 10 at each one of said boxes 3,4.

According to an embodiment, the roller conveyor 9 also comprises members 33 for selectively actuating the rollers 7 of any of the boxes 3,4.

For further construction and functional details of the mobile roller conveyor 9 according to the present invention, reference shall be made to the description above.

A method for storing ceramic products and the like is also an object of the present invention.

The method according to the invention is disclosed in claim 11 and comprises the operating steps described previously regarding the operation of the storage device 1.

It has thus been observed that the invention attains the intended objects.

In the light of the above, with respect to storage devices of the known type, the solution according to the present invention comprises a mobile roller conveyor 9 with a support structure 10 that is extremely slim, light and simplified, if compared with the large and bulky portals that distinguish the current devices.

As a matter of fact, the mobile roller conveyor 10 may be displaced horizontally preferably in the absence of products, and thus with the cantilevered parts light and not difficult to handle, in that the sorting of the group of products towards a box 3 or the other is carried out by the sorter element 19, specifically provided for.

The mobile roller conveyor 9 may thus be dimensioned in a manner such to mainly resist to the typical stresses caused by the vertical translation of the transfer plane 11 with motor-driven rollers 12, that are definitely lower than those also caused by a possible horizontal translation of the same, also possibly bearing the group of products to be stored positioned on a cantilevered plane, as it occurs in the prior art instead. Another important advantage of this solution lies in the fact that the dimensioning of the support structure 10 of the mobile roller conveyor 9 is not affected by the possible increase of the number of roller boxes 3,4 served by the roller conveyor; as a matter of fact, as the number of boxes increases, all that is required is to increase the dimensions of the support framework 20 of the sorter element 19 (which, as mentioned, is not displaced with respect to the floor P) and extend the tracks 15a of the horizontal transmission means 14.

The aforementioned advantages are obtained through a particularly simple and inexpensive solution from a construction point of view.

In practice, the materials used as well as the contingent dimensions may vary depending on the requirements and without departing from the scope of protection of the following claims.

## Claims

1. Storage device (1) for ceramic products and the like, comprising at least one positioning station (2) for at least two roller boxes (3,4) arranged side by side, each of which comprising a plurality of superimposed planes (6) for the insertion or extraction of ceramic product groups, said planes (6) being defined by respective pluralities of parallel rollers (7),
at least one station (8) for conveying ceramic products towards, or from, said positioning station (2),
at least one mobile roller conveyor (9), interposed between said positioning station (2) and said conveying station (8), comprising at least one transfer plane (11) of the type with motor-driven rollers (12) and at least one support structure (10) of said transfer plane (11) provided with vertical translation means (13) for selectively positioning said transfer plane (11) at a height corresponding to any one of said planes (6) of each one of said boxes (3, 4), for the insertion or the extraction of a ceramic product group towards or from each one of said planes (6),
wherein said mobile roller conveyor (9) comprises means (14) for the horizontal translation of said support structure (10) along a first direction (A) parallel to the axes of said rollers (7), adapted to selectively position said support structure (10) at each one of said boxes (3, 4),
and wherein said conveying station (8) comprises at least one element (19) for sorting ceramic product groups, positioned immediately adjacent to said mobile roller conveyor (9), adapted to translate along a second direction (B), parallel to said first direction (A), to position itself selectively towards each one of said roller boxes (3,4).

2. Device according to claim 1, wherein said horizontal translation means (14) comprise at least one guide (15) which develops parallel to the axes of said rollers (7), and at least one carriage (16), movable along said guide (15), to which said support structure (10) is fixed.

3. Device according to claim 2, wherein said guide (15) comprises at least one track (15a) fixed to the floor (P) between said conveying station (8) and said positioning station (2), to which said carriage (16) is slidably coupled.

4. Device according to claim 2 or 3, wherein said translation means (14) comprise an actuator (17) integral with the floor (P), coupled to said carriage (16) through transmission means (18).

5. Device according to the previous claim, wherein said actuator (17) comprises a gearmotor group, and said transmission means (18) comprise a pinion-rack group, or the like.

6. Device according to one of the previous claims, wherein said sorter element (19) comprises a support frame (20) having, at the top, guides (21) for a slidable roller conveyor (22) driven to translate along said second direction (B), said slidable roller conveyor (22) and said transfer plane (11) being selectively positionable at the same level to allow the transit of groups of products from one to the other in both directions.

7. Device according to claim 6, wherein said conveying station (8)
comprises a member (23) for grouping/separating ceramic product groups, arranged immediately adjacent to said sorter element (19), communicating with at least one line (29) for the input/output of ceramic products, one by one.

8. Device according to one of the previous claims, wherein said support structure (10) comprises two uprights (31) connected, at the top, by a crosspiece (32), the mutual distance between said uprights (31) being less than the total width of the overall dimensions of two of said boxes (3,4) arranged side by side in said positioning station (P).

9. Device according to one of the previous claims, wherein said mobile roller conveyor (9) comprises members (33) for the active selection of the rollers (7) of any one of said planes (6) of said boxes (3,4).

10. Device according to the previous claim, wherein said selective actuation members (33) are associated to two movable arms (34) respectively along said support structure (10), said arms (34) being selectively positionable at the sides of each one of said boxes (3,4) at any one of said planes (6), for the actuation of the respective rollers (7).

11. Method for storing ceramic products and the like, comprising the steps of providing a storage device (1) according to claim 1, conveying said ceramic products towards said mobile roller conveyor (9) or from said roller conveyor (9), translating said mobile roller conveyor (9) along a first direction (A) parallel to the axes of said rollers (7), so as to selectively position said support structure (10) at each of said boxes (3,4) with rollers (3,4) to be filled/emptied with/of the products, wherein the method further comprises a step of sorting the products arriving towards said mobile roller conveyor (9), or departing from said mobile roller conveyor (9), along a second direction (B) parallel to said first direction (A), selectively in the direction of one or the other of said roller boxes (3,4) to be filled with products, or in the direction of a line (29) for the input/output (29) of ceramic products one by one, wherein said step of translating said mobile roller conveyor (9) along said direction (A) is carried out only when said transfer plane (11) is without products, for positioning said transfer plane (11) at the roller boxes (3,4) to be filled/emptied with/of products.

12. Method according to claim 11, wherein said mobile roller conveyor (9) comprises members (33) for the active selection of the rollers (7) of any one of said planes (6) of said boxes (3,4).

13. Method according to claim 12, wherein said selective actuation members (33) are associated to two movable arms (34) respectively along said support structure (10), said arms (34) being selectively positionable at the sides of each one of said boxes (3,4) at any one of said planes (6), for the actuation of the respective rollers (7).

## Patentansprüche

1. Lagervorrichtung (1) für Keramikprodukte und dergleichen, umfassend
mindestens eine Positionierstation (2) für mindestens zwei nebeneinander angeordnete Rollenkästen (3, 4), jeder davon umfassend eine Vielzahl von übereinanderliegenden Ebenen (6) zum Einführen oder Herausnehmen von Keramikproduktgruppen, wobei die besagten Ebenen (6) durch jeweilige Vielzahlen von parallelen Rollen (7) definiert sind,
mindestens eine Station (8) zum Fördern von Keramikprodukten zur oder von der besagten Positionierstation (2),
mindestens einen mobilen Rollenförderer (9), der zwischen der besagten Positionierstation (2) und der besagten Förderstation (8) angeordnet ist, umfassend mindestens eine Transferebene (11) des Typs mit motorisch angetriebenen Rollen (12) und mindestens eine Tragkonstruktion (10) der besagten Transferebene (11), die mit vertikalen Verschiebungsmitteln (13) zum selektiven Positionieren der besagten Transferebene (11) auf eine Höhe entsprechend einer beliebigen der besagten Ebenen (6) eines jeden der besagten Kästen (3, 4) zum Einführen oder Ausziehen einer Keramikproduktgruppe in jede oder aus jeder der besagten Ebenen (6) versehen ist,
worin der besagte mobile Rollenförderer (9) Mittel (14) für die horizontale Verschiebung der besagten Tragkonstruktion (10) entlang einer ersten Richtung (A) parallel zu den Achsen der besagten Rollen (7), die für das selektive Positionieren der besagten Tragkonstruktion (10) an jeder der besagten Kästen (3, 4) ausgelegt sind, umfasst,
und worin die besagte Förderstation (8) mindestens ein Element (19) zum Sortieren von Keramikproduktgruppen, unmittelbar neben dem besagten mobilen Rollenförderer (9) positioniert, umfasst, das zum Verschieben entlang einer zweiten Richtung (B), parallel zur besagten ersten Richtung (A), ausgelegt ist, um sich selektiv zu jedem der besagten Rollenkästen (3, 4) hin zu positionieren.

2. Vorrichtung nach Anspruch 1, **dadurch gekennzeichnet, dass** die besagten horizontalen Verschiebungsmittel (14) mindestens eine Führung (15), die sich parallel zu den Achsen der besagten Rollen (7) erstreckt, und mindestens einen Schlitten (16), bewegbar entlang der besagten Führung (15), an der die besagte Tragkonstruktion (10) befestigt ist, umfassen.

3. Vorrichtung nach Anspruch 2, worin die besagte Führung (15) mindestens eine Schiene (15a), befestigt am Boden (P) zwischen der besagten Förderstation (8) und der besagten Positionierstation (2), an die der besagte Schlitten (16) verschiebbar gekoppelt ist, umfasst.

4. Vorrichtung nach Anspruch 2 oder 3, worin die besagten Verschiebungsmittel (14) einen einstückig mit dem Boden (P) ausgebildeten Aktuator (17), der mit dem besagten Schlitten (16) durch Antriebsmittel (18) gekoppelt ist, umfassen.

5. Vorrichtung nach dem vorangegangenen Anspruch, worin der besagte Aktuator (17) eine Getriebemotorgruppe umfasst und die besagten Antriebsmittel (18) eine Ritzel-Zahnstange-Gruppe oder dergleichen umfassen.

6. Vorrichtung nach einem der vorangegangenen Ansprüche, worin das besagte Sortierelement (19) einen Tragrahmen (20) umfasst, der oben Führungen (21) für einen verschiebbaren Rollenförderer (22), der zum Verschieben entlang der besagten zweiten Richtung (B) angetrieben wird, aufweist, wobei der besagte verschiebbare Rollenförderer (22) und die besagte Transferebene (11) selektiv auf der gleichen Höhe positionierbar sind, um den Durchgang von Produktgruppen von der einen zur anderen in beide Richtungen zu ermöglichen.

7. Vorrichtung nach Anspruch 6, worin die besagte Förderstation (8) ein Element (23) zum Gruppieren/Trennen von Keramikprodukten umfasst, das unmittelbar neben dem besagten Sortierelement (19), das mit mindestens einer Linie (29) für die Eingabe/Ausgabe von Keramikprodukten, eines nach dem anderen in Verbindung steht, angeordnet ist.

8. Vorrichtung nach einem der vorangegangenen Ansprüche, worin die besagte Tragkonstruktion (10) zwei Ständer (31) umfasst, die oben durch einen Querträger (32) verbunden sind, wobei der gegenseitige Abstand zwischen den besagten Ständern (31) geringer ist als die Gesamtbreite der Gesamtabmessungen von zwei der besagten Kästen (3, 4), die nebeneinander in der besagten Positionierstation (P) angeordnet sind.

9. Vorrichtung nach einem der vorangegangenen Ansprüche, worin der besagte mobile Rollenförderer (9) Elemente (33) für die aktive Auswahl der Rollen (7) irgendeiner der besagten Ebenen (6) der besagten Kästen (3, 4) umfasst.

10. Vorrichtung nach dem vorangegangenen Anspruch, worin die besagten selektiven Betätigungselemente (33) mit jeweils zwei beweglichen Armen (34) entlang der besagten Tragkonstruktion (10) verbunden sind, wobei die besagten Arme (34) selektiv an den Seiten eines jeden der besagten Kästen (3, 4) auf irgendeiner der besagten Ebenen (6) für die Betätigung der jeweiligen Rollen (7) positionierbar sind.

11. Verfahren zum Lagern von Keramikprodukten und dergleichen, umfassend die Schritte des Bereitstellens einer Lagervorrichtung (1) nach Anspruch 1, des Förderns der besagten Keramikprodukte zu dem mobilen Rollenförderer (9) hin oder von dem besagten Rollenförderer (9) weg,
des Verschiebens des besagten mobilen Rollenförderers (9) entlang einer ersten Richtung (A) parallel zu den Achsen der besagten Rollen (7), um die besagte Tragkonstruktion (10) selektiv an jeder der besagten Rollenkästen (3, 4) zu positionieren, die mit/von den Produkten gefüllt/entleert werden sollen,
worin das besagte Verfahren ferner einen Schritt des Sortierens der sich zum dem besagten mobilen Rollenförderers (9) hin gelangenden oder sich von dem besagten mobilen Rollenförderer (9) wegbewegenden Produkte entlang einer zweiten Richtung (B), parallel zu der besagten ersten Richtung (A), selektiv in die Richtung des einen oder des anderen der besagten Rollenkästen (3, 4), die mit Produkten zu füllen sind, oder in die Richtung einer Linie (29) für die Eingabe/Ausgabe (29) von Keramikprodukten eines nach dem anderen umfasst, worin der besagte Schritt des Verschiebens des besagten mobilen Rollenförderers (9) entlang der besagten Richtung (A) nur ausgeführt wird, wenn die besagte Transferebene (11) ohne Produkte ist, um die besagte Transferebene (11) an den Rollenkästen (3, 4) zu positionieren, die mit/von Produkten gefüllt/entleert werden sollen.

12. Verfahren nach Anspruch 11, worin der besagte mobile Rollenförderer (9) Elemente (33) für die aktive Auswahl der Rollen (7) irgendeiner der besagten Ebenen (6) der besagten Kästen (3, 4) umfasst.

13. Verfahren nach Anspruch 12, worin die besagten selektiven Betätigungselemente (33) mit jeweils zwei beweglichen Armen (34) entlang der besagten Tragkonstruktion (10) verbunden sind, wobei die besagten Arme (34) selektiv an den Seiten eines jeden der besagten Kästen (3, 4) auf irgendeiner der besagten Ebenen (6) für die Betätigung der jeweiligen Rollen (7) positionierbar sind.

## Revendications

1. Dispositif de stockage (1) pour des produits céramiques et analogues, comprenant
au moins une station de positionnement (2) pour au moins deux boîtes à rouleaux (3, 4) disposées côte-à-côte, chacune d'elles comprenant plusieurs plans (6) superposés pour l'insertion ou l'extraction de groupes de produits céramiques, lesdits plans (6) étant définis par des pluralités respectives de rouleaux parallèles (7),
au moins une station (8) pour transporter les produits céramiques en direction, ou en provenance, de ladite station de positionnement (2),
au moins un transporteur à rouleaux mobile (9), interposé entre ladite station de positionnement (2) et ladite station de transport (8), comprenant au moins un plan de transfert (11) du type avec des rouleaux motorisés (12) et au moins une structure de support (10) dudit plan de transfert (11) dotée de moyens de translation verticale (13) pour le positionnement sélectif dudit plan de transfert (11) à une hauteur correspondant à l'un quelconque desdits plans (6) de chacune desdites boîtes (3, 4), pour l'insertion ou l'extraction d'un groupe de produits céramiques en direction ou en provenance de chacun desdits plans (6),
dans lequel ledit transporteur à rouleaux mobile (9) comprend des moyens (14) pour la translation horizontale de ladite structure de support (10) le long d'une première direction (A) parallèle aux axes desdits rouleaux (7), adaptés pour positionner sélectivement ladite structure de support (10) au niveau de chacune desdites boîtes (3, 4), et dans lequel ladite station de transport (8) comprend au moins un élément (19) pour trier les groupes de produits céramiques, positionné immédiatement adjacent audit transporteur à rouleaux mobile (9), adapté pour se déplacer par translation le long d'une deuxième direction (B), parallèle à ladite première direction (A), pour se positionner sélectivement vers chacune desdites boîtes à rouleaux (3, 4).

2. Dispositif selon la revendication 1, dans lequel lesdits moyens de translation horizontale (14) comprennent au moins un guide (15) développé parallèlement aux axes desdits rouleaux (7), et au moins un chariot (16), mobile le long dudit guide (15), sur lequel ladite structure de support (10) est fixée.

3. Dispositif selon la revendication 2, dans lequel ledit guide (15) comprend au moins une piste (15a) fixée au sol (P) entre ladite station de transport (8) et ladite station de positionnement (2), à laquelle ledit chariot (16) est accouplé de manière coulissante.

4. Dispositif selon la revendication 2 ou 3, dans lequel lesdits moyens de translation (14) comprennent un actionneur (17) faisant partie intégrante du sol (P), couplé audit chariot (16) par l'intermédiaire de moyens de transmission (18).

5. Dispositif selon la revendication précédente, dans lequel ledit actionneur (17) comprend un groupe de moteur à engrenages, et lesdits moyens de transmission (18) comprennent un groupe pignon-crémaillères, ou analogues.

6. Dispositif selon l'une des revendications précédentes, dans lequel ledit élément de triage (19) comprend un bâti de support (20) ayant à son sommet des guides (21) pour un transporteur à rouleaux coulissant (22) entraîné pour se déplacer par translation le long de ladite deuxième direction (B), ledit transporteur à rouleaux coulissant (22) et ledit plan de transfert (11) étant positionnables sélectivement au même niveau pour permettre le transit de groupes de produits de l'un à l'autre dans les deux directions.

7. Dispositif selon la revendication 6, dans lequel ladite station de transport (8) comprend un élément (23) pour le regroupement/la séparation de groupes de produits céramiques, disposé immédiatement adjacent audit élément de triage (19), en communication avec au moins une ligne (29) pour l'entrée/la sortie de produits céramiques, un par un.

8. Dispositif selon l'une des revendications précédentes, dans lequel ladite structure de support (10) comprend deux montants (31) raccordés au sommet par une traverse (32), la distance mutuelle entre lesdits montants (31) étant inférieure à la largeur totale des dimensions totales de deux desdites boîtes (3, 4) disposées côte-à-côte dans ladite station de positionnement (P).

9. Dispositif selon l'une des revendications précédentes, dans lequel ledit transporteur à rouleaux mobile (9) comprend des éléments (33) pour la sélection active des rouleaux (7) de l'un quelconque desdits plans (6) desdites boîtes (3, 4).

10. Dispositif selon la revendication précédente, dans lequel lesdits éléments d'actionnement sélectif (33) sont associés à deux bras mobiles (34), respectivement, le long de ladite structure de support (10), lesdits bras (34) étant positionnables sélectivement sur les côtés de chacune desdites boîtes (3, 4) au niveau de l'un quelconque desdits plans (6), pour l'actionnement des rouleaux (7) respectifs.

11. Méthode pour le stockage de produits céramiques et analogues, comprenant les étapes de fourniture d'un dispositif de stockage (1) selon la revendication 1, transport desdits produits céramiques en direction dudit transporteur à rouleaux mobile (9) ou en provenance dudit transporteur à rouleaux (9),
translation dudit transporteur à rouleaux mobile (9) le long d'une première direction (A) parallèle aux axes desdits rouleaux (7), de façon à positionner sélectivement ladite structure de support (10) au niveau de chacune desdites boîtes à rouleaux (3, 4) qui doivent être remplis/vidés des produits,
dans lequel le méthode comprend en outre une étape de triage des produits arrivant vers ledit transporteur à rouleaux mobile (9), ou partant dudit transporteur à rouleaux mobile (9), le long d'une deuxième direction (B) parallèle à ladite première direction (A), sélectivement dans la direction de l'un ou de l'autre desdites boîtes à rouleaux (3, 4) à remplir de produits, ou dans la direction d'une ligne (29) pour l'entrée/la sortie (29) de produits céramiques un par un, dans lequel ladite étape de translation dudit transporteur à rouleaux mobile (9) le long de ladite direction (A) est réalisée seulement quand ledit plan de transfert (11) est dépourvu de produits, pour positionner ledit plan de transfert (11) au niveau des boîtes à rouleaux (3, 4) à remplir/vider des produits.

12. Méthode selon la revendication 11, dans lequel ledit transporteur à rouleaux mobile (9) comprend des éléments (33) pour la sélection active des rouleaux (7) de l'un quelconque desdits plans (6) desdites boîtes (3, 4).

13. Méthode selon la revendication 12, dans lequel lesdits éléments d'actionnement sélectif (33) sont associés à deux bras mobiles (34), respectivement, le long de ladite structure de support (10), lesdits bras (34) étant positionnables sélectivement sur les côtés de chacune desdites boîtes (3, 4) au niveau de l'un quelconque desdits plans (6), pour l'actionnement des rouleaux (7) respectifs.
